# FASCICULE DE BREVET EUROPEEN

(11) **EP 3 580 479 B1**
(45) Date de publication et mention de la délivrance du brevet: **24.11.2021**
(21) Numéro de dépôt: 18701521.9
(22) Date de dépôt: 12.01.2018
(51) Int. Cl.: F16H 63/30

(54) **DISPOSITIF DE TRANSMISSION DE MOUVEMENT POUR ACTIONNEUR DE PASSAGE DE VITESSES**
BEWEGUNGSÜBERTRAGUNGSVORRICHTUNG FÜR EINEN GANGSCHALTAKTUATOR
MOVEMENT TRANSMISSION DEVICE FOR A GEAR SHIFT ACTUATOR

(30) Priorité: 07.02.2017 FR 1751004
(43) Date de publication de la demande: 18.12.2019
(73) Titulaire: Renault S.A.S., 92100 Boulogne-Billancourt (FR); Nissan Motor Co. Ltd, Yokohama-Shi, Kanagawa 220-8623 (JP)
(72) Inventeur: GAILLIARD, Fabien, 92500 Rueil-Malmaison (FR)
(74) Mandataire: Rougemont, Bernard
(86) Numéro de dépôt international: PCT/FR2018/050079
(87) Numéro de publication internationale: WO 2018/146393

(56) Documents cités:
- DE-A1-102014 201 250
- JP-A- 2005 308 181
- KR-A- 20080 065 365

## Description

La présente invention se rapporte à la commande interne du passage des vitesses, dans une boîte de vitesses robotisée ou automatisée.

Plus précisément, elle a pour objet un dispositif de transmission de mouvement pour actionneur de passage de boîte de vitesses, entre un moteur rotatif d'entraînement et un axe de fourchette déplacé axialement pour engager ou dégager une vitesse. Un tel dispositif, connu par exemple de FR2820484, comporte des moyens de démultiplication de mouvement de rotation entre l'arbre de sortie du moteur, et un doigt de passage engagé dans un crabot solidaire de l'axe de fourchette.

La transmission du mouvement entre un actionneur de passage de vitesses de boîte robotisée, tel qu'un moteur rotatif d'actionnement, et la fourchette concernée, s'effectue à partir d'un arbre de sortie du moteur, entraînant en rotation une tige d'actionnement, par l'intermédiaire d'un système de démultiplication de mouvement. La tige d'actionnement porte le plus souvent un doigt d'actionnement, pivotant avec l'extrémité de la tige. Le doigt est engagé dans une encoche, ou crabot, solidaire de l'axe de la fourchette. Elle le déplace en translation. Le débattement du doigt est limité angulairement autour d'une position centrale de point mort. Il permet de déplacer axialement l'axe de la fourchette jusqu'à l'une ou l'autre de deux positions d'engagement de vitesse, de part et d'autre d'une position centrale de point mort.

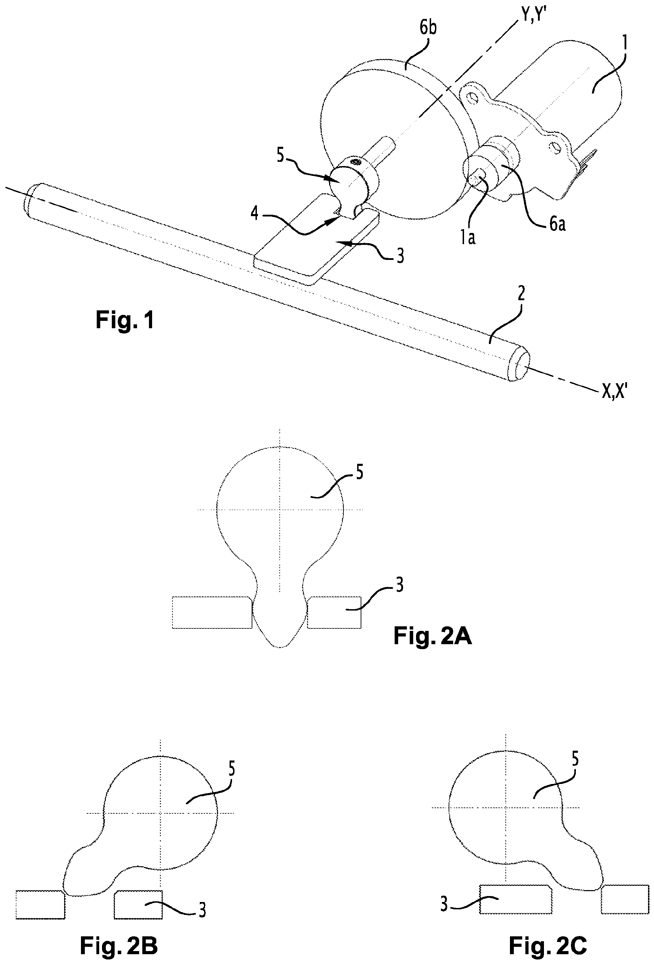

Selon une première disposition non conforme à l'invention et illustrée par les figures 1 à 2C, la transmission du mouvement entre le moteur d'actionnement 1 et l'axe de passage, ou axe de fourchette 2, s'effectue de la manière suivante. L'axe 2 doit se déplacer en translation suivant l'axe X, X', pour assurer le passage d'une vitesse. Le crabot 3 est solidaire de l'axe 2. Il présente une encoche 4 en U. Le doigt 5 vient s'insérer dans l'encoche 4. Il est mis en rotation autour d'un axe Y, Y' par le moteur 1, dont l'arbre de sortie la est orthogonal à l'axe X, X'. Un engrenage 6a, 6b assure la démultiplication du mouvement, entre l'arbre de sortie la du moteur, et le doigt 5.

La figure 2A représente la liaison entre le doigt 5 et le crabot 3, au point mort. Les figures 2B et 2C correspondent à deux positions de vitesse engagée. Elles mettent en évidence la difficulté d'assurer la liaison entre le doigt 5 et le crabot 3, tout au long de la course. La qualité de la liaison dépend essentiellement du profil du doigt, qui doit être suffisamment travaillé pour que le contact soit maintenu, en particulier aux extrémités de la course : les figures 2B et 2C montrent à cet égard que, si la course du crabot 3 est trop importante, sa liaison avec le doigt n'est plus assurée aux extrémités.

La présente invention vise à corriger ce problème d'actionnement.

Dans ce but, elle propose que le doigt de passage porte un pion déporté par rapport à l'axe de rotation du doigt. Ce pion est engagé dans une ouverture oblongue du crabot, de manière à provoquer le déplacement axial de l'axe de fourchette, en débattant linéairement le long de l'ouverture sous l'action du moteur d'entraînement.

La nouvelle liaison entre l'actionneur et l'axe de passage de vitesses, assure une transmission parfaite du mouvement entre le moteur d'actionnement, et la fourchette de passage de vitesses.

D'autres caractéristiques et avantages de la présente invention, ressortiront clairement de la description suivante d'un mode de réalisation non limitatif de celle-ci, en se reportant aux dessins annexés, sur lesquels :
- les figures 1, 2B et 2C illustrent une première solution,
- les figures 3, 4 et 5 illustrent un mode de réalisation préféré de l'invention,
- la figure 6 est un schéma d'ensemble du dispositif assemblé,
- les figures 7A, 7B et 7C, illustrent le débattement de ce dispositif, et
- les figures 8A, 8B illustrent le montage du pion sur le doigt de passage.

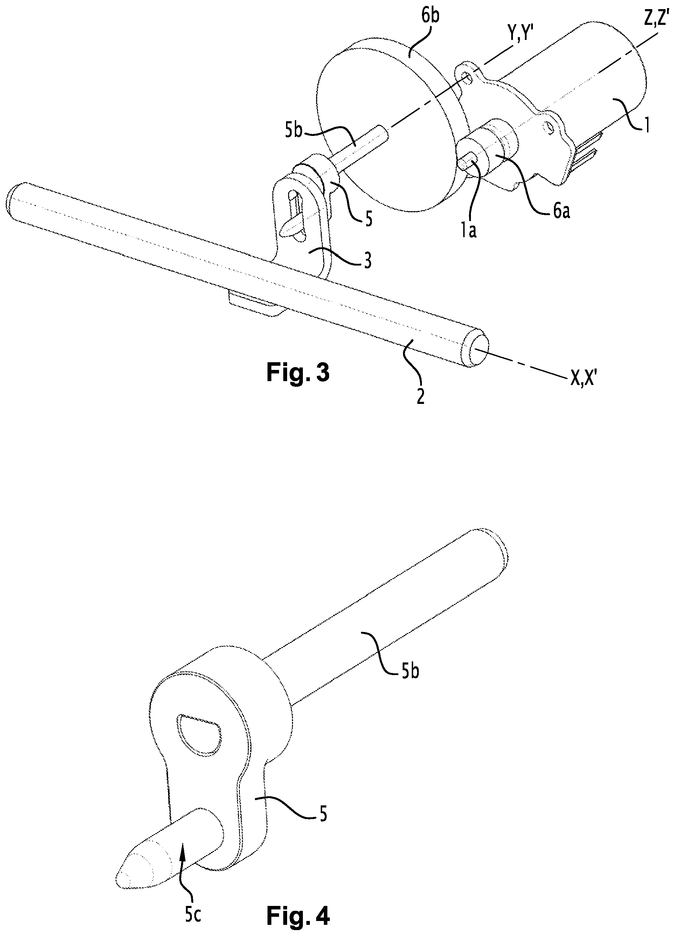

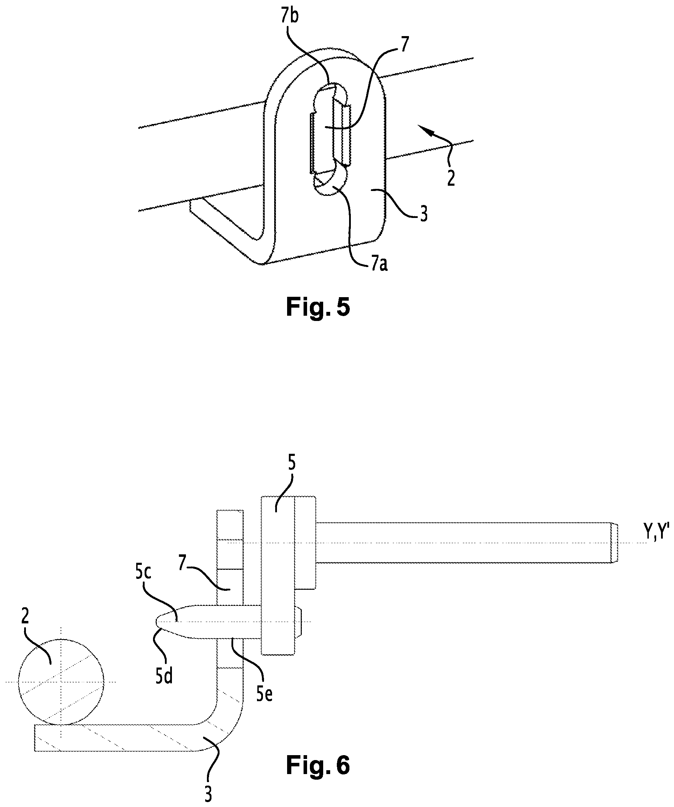

Sur la figure 3, on retrouve un axe de passage de vitesse 2, actionné suivant X, X', par un moteur électrique 1. L'arbre de sortie la du moteur est orthogonal à l'axe de la fourchette. Il transmet son mouvement, par un engrenage de démultiplication 6a, 6b, au doigt de passage 5. Celui-ci débat dans une ouverture 7 d'un crabot 3 de type particulier 3, conforme à l'invention. Le doigt 5, entrainé par son axe 5b, porte un pion profilé 5c mis en évidence sur la figure 4. Le pion 5c s'étend perpendiculairement au plan principal du doigt de passage 5. Comme le montre la figure 5, l'axe de passage de vitesses 2 est solidaire du crabot 3, dont on voit l'ouverture oblongue 7. Le dispositif de transmission de mouvement pour actionneur de passage de boîte de vitesses entre un moteur rotatif d'entraînement 1 et un axe de fourchette 2 déplacé axialement pour engager ou dégager une vitesse de la boîte proposé, est décrit sur cette figure. Il comporte des moyens de démultiplication 6a, 6b de mouvement de rotation, entre l'arbre de sortie la du moteur et le doigt de passage 5 engagé dans le crabot 3, solidaire de l'axe de fourchette 2.

La figure 6 illustre l'agencement proposé : le doigt de passage 5 porte le pion 5b qui est déporté par rapport à l'axe de rotation Z, Z' du doigt; le pion 5b est engagé dans l'ouverture oblongue 7 du crabot. Cette ouverture est fermée à ses deux extrémités. Elle est orthogonale à l'axe de rotation Z, Z' du moteur, et à l'axe de déplacement X, X' de la fourchette. Ses deux extrémités 7a, 7b sont arrondies, et plus larges que sa partie médiane, pour recevoir le pion 5c dans les positions de rapport engagé.

Le débattement du pion 5c dans l'ouverture 7 du crabot 3, provoque le déplacement axial de l'axe de fourchette 2, en débattant linéairement le long de l'ouverture 7, sous l'action du moteur d'entraînement 1.

Le pion profilé 5c présente une partie cylindrique 5e en vis-à-vis des flancs du trou oblong, pour assurer la transmission du mouvement. L'extrémité profilée 5d en forme d'ogive, ainsi que les chanfreins 3a présents sur les flancs du trou oblong du crabot 5b, servent au montage de l'ensemble.

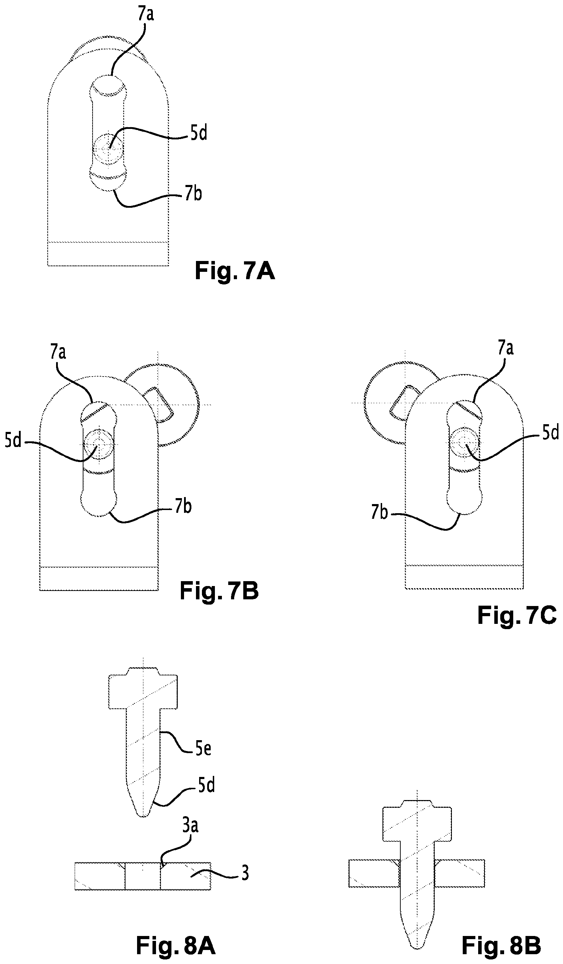

Sur les figures 7A, 7B et 7C, le doigt 5 et son pion 5c sont représentés dans trois positions, correspondant respectivement au point mort et à l'engagement de deux vitesses. Le pion 5c débat le long de l'ouverture 7 du crabot entre ces trois positions, sous la commande de l'axe 5b, lui-même entraîné en rotation par le moteur 1. L'ensemble rigide, constitué de l'axe du doigt 5b, du doigt lui-même 5, et du pion 5c, subit une rotation imposée par l'engrenage 6a, 6b. La liaison entre le pion 5 et le crabot 3 assure la translation correcte de l'axe 2 en X, X'. Le pion 5c débat dans l'ouverture 7 autour d'une position centrale de point mort, entre ses deux positions extrêmes de rapport engagé. L'ouverture 7 du crabot est dimensionnée de façon à assurer au pion une course de translation suffisante pour déplacer l'axe de fourchette entre les deux positions d'engagement de vitesses, des figures 7B et 7C.

Les avantages de l'invention sont nombreux. Les figures 8A et 8B mettent notamment en évidence la facilité de montage du dispositif : l'extrémité 5d du pion 5c présente une forme profilée coopérant, lors de son montage sur le crabot, avec des chanfreins 3a ménagés sur les flancs du crabot 3, pour rattraper les dispersions entre ces deux pièces.

Enfin, l'ensemble constitué du doigt 6, du moteur 3, et des éléments de démultiplication 4, peut se fixer d'un seul bloc sur la commande interne de la boîte de vitesses.

## Revendications

1. Dispositif de transmission de mouvement pour actionneur de passage de boîte de vitesses, comportant un moteur rotatif d'entraînement (1) dont l'arbre de sortie (1a) est orthogonal à un axe de fourchette (2), des moyens de démultiplication (6a, 6b) du mouvement entre l'arbre de sortie (1a) du moteur et un doigt de passage (5) entraîné en rotation par le moteur, et un crabot (3) solidaire de l'axe de fourchette (2) déplacé par le doigt de passage (5) pour engager ou dégager une vitesse de la boîte, **caractérisé en ce que** le doigt de passage (5) porte un pion (5c) qui est déporté par rapport à son axe de rotation (Y, Y'), et qui est engagé dans une ouverture oblongue (7) du crabot (3), de manière à provoquer le déplacement axial de l'axe de fourchette (2) en débattant linéairement le long de cette ouverture sous l'action du moteur d'entraînement (1).

2. Dispositif de transmission de mouvement selon la revendication 1, **caractérisé en ce que** le pion (5c) s'étend perpendiculairement au plan principal du doigt de passage.

3. Dispositif de transmission de mouvement selon la revendication 1 ou 2, **caractérisé en ce que** l'ouverture (7) du crabot est orthogonale à l'axe de rotation (Z, Z') du moteur (1) et à l'axe de déplacement (X, X') de la fourchette.

4. Dispositif de transmission de mouvement selon la revendication 1, 2 ou 3, **caractérisé en ce que** l'ouverture du crabot (7) est fermée.

5. Dispositif de transmission de mouvement selon l'une des revendications précédentes, **caractérisé en ce que** le pion (5c) débat dans l'ouverture (7) autour d'une position centrale de point mort, entre deux positions extrêmes de rapport en gagé.

6. Dispositif de transmission de mouvement selon la revendication 5, **caractérisé en ce que** l'ouverture (7) du crabot (3) présente deux extrémités arrondies (7a, 7b) plus larges que sa partie médiane, pour recevoir le pion (5c) dans les positions de rapport engagé.

7. Dispositif de transmission de mouvement selon l'une des revendications précédentes, **caractérisé en ce que** l'extrémité (5d) du pion présente une forme profilée coopérant au montage sur le crabot avec des chanfreins (3a) ménagés sur les flancs du crabot (3) pour rattraper les dispersions entre ces deux pièces.

## Patentansprüche

1. Bewegungsübertragungsvorrichtung für einen Getriebe-Schaltaktuator, die einen Drehantriebsmotor (1) aufweist, dessen Abtriebswelle (1a) sich orthogonal zu einer Gabelachse (2) befindet, Vorrichtungen zur Übersetzung (6a, 6b) der Bewegung zwischen der Abtriebswelle (1a) des Motors und einem Schaltfinger (5), der durch den Motor in Drehung versetzt wird, und eine Klaue (3), die fest mit der Gabelachse (2) verbunden ist, die durch den Schaltfinger (5) verschoben wird, um einen Gang des Getriebes einzulegen oder herauszunehmen, **dadurch gekennzeichnet, dass** der Schaltfinger (5) einen Stift (5c) trägt, der versetzt zu seiner Drehachse (Y, Y') angeordnet ist und in eine längliche Öffnung (7) der Klaue (3) eingreift, um die Axialbewegung der Gabelachse (2) zu bewirken, indem er sich unter der Wirkung des Antriebsmotors (1) linear entlang dieser Öffnung bewegt.

2. Bewegungsübertragungsvorrichtung nach Anspruch 1, **dadurch gekennzeichnet, dass** sich der Stift (5c) senkrecht zur Hauptebene des Schaltfingers erstreckt.

3. Bewegungsübertragungsvorrichtung nach Anspruch 1 oder 2, **dadurch gekennzeichnet, dass** die Öffnung (7) der Klaue orthogonal zur Drehachse (Z, Z') des Motors (1) und zur Bewegungsachse (X, X') der Gabel angeordnet ist.

4. Bewegungsübertragungsvorrichtung nach Anspruch 1, 2 oder 3, **dadurch gekennzeichnet, dass** die Öffnung (7) der Klaue geschlossen ist.

5. Bewegungsübertragungsvorrichtung nach einem der vorhergehenden Ansprüche, **dadurch gekennzeichnet, dass** sich der Stift (5c) in der Öffnung (7) um eine mittlere Neutralstellung zwischen zwei Endpositionen eines eingelegten Gangs bewegt.

6. Bewegungsübertragungsvorrichtung nach Anspruch 5, **dadurch gekennzeichnet, dass** die Öffnung (7) der Klaue (3) zwei abgerundete Enden (7a, 7b) aufweist, die breiter als ihr Mittelteil sind, um den Stift (5c) in den Positionen für eingelegten Gang aufzunehmen.

7. Bewegungsübertragungsvorrichtung nach einem der vorhergehenden Ansprüche, **dadurch gekennzeichnet, dass** das Ende (5d) des Stifts eine Profilform aufweist, die bei Montage auf der Klaue mit Abschrägungen (3a) zusammenarbeitet, die in die Flanken der Klaue (3) eingearbeitet wurden, um die Streuungen zwischen diesen beiden Teilen auszugleichen.

## Claims

1. Movement transmission device for a gearbox gearshift actuator, comprising a rotary drive motor (1) of which the output shaft (1a) is orthogonal to a fork spindle (2), step-down means (6a, 6b) demultiplying the movement between the output shaft (1a) of the motor and a gearshift finger (5) rotationally driven by the motor, and a claw (3) secured to the fork spindle (2) and moved by the gearshift finger (5) to engage or disengage a gear of the gearbox, **characterized in that** the gearshift finger (5) bears a pin (5c) which is offset with respect to its axis of rotation (Y, Y') and which is engaged in an oblong opening (7) of the claw (3), so as to cause the fork spindle (2) to move axially in linear travel along the opening (7) under the action of the drive motor (1) .

2. Movement transmission device according to Claim 1, **characterized in that** the pin (5c) extends perpendicular to the main plane of the gearshift finger.

3. Movement transmission device according to Claim 1 or 2, **characterized in that** the opening (7) of the claw is orthogonal to the axis of rotation (Z, Z') of the motor (1) and to the axis of movement (X, X') of the fork.

4. Movement transmission device according to Claim 1, 2 or 3, **characterized in that** the opening of the claw (7) is closed.

5. Movement transmission device according to one of the preceding claims, **characterized in that** the pin (5c) travels in the opening (7) about a neutral central position, between two extreme gear-ratio-engaged positions.

6. Movement transmission device according to Claim 5, **characterized in that** the opening (7) of the claw (3) has two rounded ends (7a, 7b) that are wider than its middle part, to receive the pin (5c) in the gear-ratio-engaged positions.

7. Movement transmission device according to one of the preceding claims, **characterized in that** the end (5d) of the pin has a profiled shape which, upon mounting on the claw, collaborates with chamfers (3a) formed on the flanks of the claw (3) in order to compensate for spread between these two components.
